# EUROPEAN PATENT SPECIFICATION

(11) **EP 3 386 609 B1**
(45) Date of publication and mention of the grant of the patent: **21.02.2024**
(21) Application number: 16825906.7
(22) Date of filing: 08.12.2016
(51) Int. Cl.: B01D 53/14

(54) **PROCESS AND SYSTEM FOR THE PURIFICATION OF A GAS**
VERFAHREN UND ANLAGE ZUR REINIGUNG EINES GASES
PROCÉDÉ ET SYSTÈME DE PURIFICATION D'UN GAZ

(30) Priority: 08.12.2015 NL 2015921
(43) Date of publication of application: 17.10.2018
(73) Proprietor: Frames Renewable Energy Solutions B.V., 2405 WB Alphen aan den Rijn (NL)
(72) Inventor: REXWINKEL, Glenn, 7534PC Enschede (NL); TEN ASBROECK, Nick Antonius Maria, 7481 VC Haaksbergen (NL)
(74) Representative: Arnold & Siedsma
(86) International application number: PCT/NL2016/000022
(87) International publication number: WO 2017/099581

(56) References cited:
- DE-A1- 10 356 276
- US-A1- 2010 107 872
- US-A1- 2014 134 710
- US-A1- 2014 329 299
- US-B1- 8 840 708
- TENTSCHER, W.: "Anforderungen und Aufbereitung von Biogas zur Einspeisung in Erdgasnetze", GWF DAS GAS- UND WASSERFACH, GAS-ERDGAS, vol. 148 (2007), no. 9, 2007, XP009191826,

## Description

### Field of the invention

The invention relates to a process for purification of a feed gas comprising the steps of:
- compressing the feed gas;
- removing water from the compressed gas;
- treating the dried and compressed gas for the removal of impurities.

The invention also relates to a system for the purification of feed gas, comprising
- a compressor with an inlet for feed gas, an inlet for a recirculation gas stream, and an outlet for compressed gas;
- cooling means for cooling the compressed gas;
- a gas-liquid separator arranged downstream of the cooling means for removal of condensate formed during treatment of the compressed gas with the cooling means;
- means for absorbing impurities including volatile organic compounds (VOCs) and carbon dioxide from the compressed and dried gas, provided with an recirculation outlet for a recirculation gas stream, and an outlet for the thus purified gas.

### Background of the invention

Such a process and such a system are known from WO2007/080169A2. The known process is particularly intended for methane recovery from either landfill feed gas or other anaerobic digesters, for example digesters used for processing farming waste or food processing waste. In the present invention, the feed gas may be biogas, landfill feed gas or any other type of natural gas. Alternatively, the feed gas may be a biogas or landfill gas that has already been treated for the removal of hydrogen sulphide (H2S). Typically and also in the context of the present invention, the feed gas suitably comprises alkanes, particularly lower alkanes, such as C1-C6 alkanes, more particularly C1-C4 alkanes as its key component. Typically, the alkane that is primarily present is methane. Prior to purification, the methane content of the gas is for instance 20-80vol% of the gas, typically 30-60vol%. Other components of the gas are CO2, for instance in 20-60vol%, water, for instance in 1-15vol%, and volatile organic compounds (hereinafter also referred to as VOCs).

The known process is based thereon that the feed gas is first treated to remove hydrogen sulphide, and is subsequently compressed and then treated to remove further impurities. The treatment involves the chilling, i.e. cooling, the compressed gas to between 0.1⁰C and 10⁰C. Subsequently, water is removed, particularly in a so-called Pressure Swing Adsorption (PSA) drier, in which operation VOCs may be removed as well. In order to further remove the VOCs, a Granulated Active Carbon (GAC) column is placed after the PSA drier. A membrane separation unit is present downstream of the GAC column to removed the bulk of the carbon dioxide (CO₂) content of the stream. The combination is deemed beneficial, as the membrane needs to be protected from VOCs and any particulates in order to have a long life. Another PSA drier is present downstream of the GAC column to remove the bulk of any nitrogen and most of the remainder of the oxygen, as well as polishing the final traces of the CO₂.

It is a disadvantage of the known process that a GAC column is needed. The use of such a column with activated carbon has the disadvantage that the active carbon needs to be replaced regularly. This leads to significant costs for the operation of a biogas purification plant, which may endanger viability in the long run. Still, it is desired that the resulting gas meets the specifications for gas with respect to its contents of impurities.

A further process is known from US8,840,708. Herein use is made of a first and a second solvent absorber. The first absorber absorbs trace contaminants of hydrocarbons, aromatics and water from the feed gas, particularly landfill gas. In the second absorber solvent absorbs carbon dioxide (CO₂) from the gas. The solvent of the second absorber is regenerated by means of a flash system, wherein the CO2 is liberated in three flash tanks operating at subsequently decreasing pressures. The CO₂ liberated in the first flash tank is returned to the feed gas downstream of the first absorber and upstream of the second absorber. The CO₂ liberated in the second flash tank is vented. The CO₂ liberated in the third flash tank is transmitted to a regeneration means for the solvent of the first absorber. This regeneration means is in itself an absorber. Herein, the CO₂ is used to strip trace contaminants from the solvent of the first absorber. The resulting gas stream of CO₂ and trace contaminants is heated in an incinerator to combust the contaminations into combustion products. Downstream of the third flash tank, the solvent of the second absorber is partially led back directly, and partially led to an ancillary absorber to extract further CO₂ in exchange to air.

This known process is already disadvantageous, since the CO₂ and the trace contaminants are ultimately removed into the atmosphere. That is undesired, both economically and ecologically. Furthermore, the system makes use of two absorbers in series, as well as a third absorber and again an ancillary absorber.

This implies not merely a significant material investment, but also the first, second absorber need to be of approximately the same size due to the need to treat all gas. Also, the third absorber treats all the solvent from the first absorber.

### Summary of the invention

It is therefore an object of the invention to provide an improved process for the purification of a feed gas of the type mentioned in the opening paragraph, particularly a biogas such as originating from farmers or biological wastes, or a land fill feed gas, which may be operated in a cost-effective manner without any need for an activated carbon column, or wherein any activated carbon column is intended for special purposes and/or for an emergency, such that the frequency of replacement of the active carbon is strongly reduced.

This object is achieved in a process as claimed in claim 1, comprising the steps of compressing the feed gas; removing water from the compressed gas, and treating the at least partially dried and compressed gas for the removal of impurities, wherein the treatment step comprises passing the at least partially dried and compressed gas through a solvent absorber to remove volatile organic compounds (VOCs) and carbon dioxide and any water. Herein, wherein the solvent absorber is arranged in a solvent circulation circuit comprising a first and a second treatment means for regeneration of the solvent to remove the absorbed impurities, said first treatment means being configured for operating at a higher pressure than the second treatment means. Part of the solvent is removed from the solvent recirculation circuit in a removal stream, which is after reduction of its VOC and water concentration returned to the solvent recirculation circuit.

The object is further achieved in a system for the purification of feed gas as claimed in claim 11 comprising: a compressor with an inlet for feed gas, an inlet for a recirculation gas stream, and an outlet for compressed gas; cooling means for cooling the compressed gas; a gas-liquid separator arranged downstream of the cooling means for removal of condensate formed during treatment of the compressed gas with the cooling means; means for absorbing impurities including volatile organic compounds (VOCs), carbon dioxide and any water from the compressed and at least partially dried gas, provided with an recirculation outlet for a recirculation gas stream, and an outlet for the thus purified gas. Herein, the means for absorbing impurities comprise a solvent absorber, which is provided with an inlet for solvent, and with an outlet for the thus treated gas. The solvent absorber is arranged in a solvent circulation circuit comprising a first and a second treatment means for regeneration of the solvent to remove the absorbed impurities, said first treatment means being configured for operating at a higher pressure than the second treatment means. The solvent recirculation circuit is further configured for splitting off a removal stream, wherein a reclaimer unit is present for reducing the VOC concentration of the removal stream, and wherein a solvent outlet of the reclaiming unit is coupled to the solvent recirculation circuit.

According to the invention, a solvent absorber is used instead of an activated carbon column. The removal of impurities in the solvent absorber is operated in a substantially isothermal manner; that is that both the feed gas and the solvent absorber have been cooled in advance of the separation to approximately the same temperature. Herewith, VOCs, a major portion of the carbon dioxide (CO2) and any water can be removed from the at least partially dried and compressed gas.

Typically, a major portion of the water that is initially present, is condensed in a preceding condenser. The condensed water is then suitably separated in a vapour-liquid separator. VOCs, water and CO2 absorbed by the solvent are at least partially desorbed in the first and second treatment means.

More particularly, the solvent absorber in the present invention is arranged to use both water, carbon dioxide and VOCs, after an initial step of water removal. This has the advantage over the process of US8,840,708 that the main portion of CO₂ and VOCs are removed from the gas at the same stage, rather than at two different absorbers. The VOC content of the solvent is then reduced by means of dividing a removal stream from the solvent recirculation circuit in or downstream of the first treatment means and upstream of the second treatment means. The removal stream to be divided may be maintained relatively small, for instance up to 10volume% of the total solvent in the solvent recirculation circuit. The VOCs may then be collected separately.

According to the invention, the treatment occurs by pressure reduction, so as to generate a (flash) gas. This has the advantage that no treatment gas needs to be supplied for the regeneration of the solvent. Notwithstanding, it is not excluded that the treatment means would involve the treatment with a supplied gas. Preferably, the pressure of the first treatment is controlled at a sufficiently high level, so as to limit loss of methane. In other words, the extent of pressure reduction in the first treatment means is limited. Preferably, the pressure in the second treatment means is sufficiently low, so as to liberate carbon dioxide.

Preferably, the temperature is between 0.1⁰C and 10⁰C; more preferably the temperature is at most 8°C or even at most 5°C. Suitably, the solvent absorber is arranged for countercurrent flow of the solvent stream and the dried and compressed gas stream. It has been understood by the inventors that the methane over CO2 selectivity increases with decreasing temperature, while the overall CO2 capacity of the solvent also increases. It has been further understood by the inventors that the solvent may be regenerated in the solvent recirculation circuit. The CO₂ and the VOCs can herein be removed from the solvent, at least to a sufficient extent, by treatments with at least one treatment gas at different pressures.

According to the invention, the flash gas generated in the first treatment means is used, at least partially for the reclaiming of the VOCs from the removal stream. Therewith, there is a lot of gas available for the reclaiming, which is present at a high pressure. This has the further benefit that a high temperature of stripping can be reached if so desired. Preliminary experiments indicate that a strip temperature of 175°C can be achieved. It is observed for clarity that the use of the highpressure flash gas in the system of US8,840, 708 would lead to a significant loss of methane. Therefore, US8,840,708 rather returns the flash gas from the first flash tank to the feed gas. Such loss does not occur in the invention, at least not substantially, in that the water removal typically involves cooling of the feed gas. The cooled gas turns out to have an improved methane/CO2 selectivity in the solvent absorber, so that less methane is absorbed in the solvent. Furthermore, in a preferred implementation, flash gas is returned after reclaiming, i.e. in a reclaiming unit, to the feed gas, so that any methane in the flash gas will not be lost.

Preferably, the solvent is a so-called physical solvent, as known in the art of gas treatment, wherein the absorbed gas physically dissolves into the solvent, but does not react with the solvent or any other component therein. It is observed for clarity that a physical solvent is known in the art and is typically an organic solvent such as a dialkyl ether of polyethylene glycol (particularly the dimethyl ether also known as DMPEG), N-methylpyrrolidon, propylene carbonate, methanol, N-formylmorpholine. Commercially available examples include Genosorb^{®} and Selexol^{®}. Another solvent such as a so-called hybrid solvent is however not excluded. The advantage of a physical solvent over chemical solvents such as ethanolamines is that physical solvents are non-corrosive, requiring only carbon steel constructions and are easily regenerated by flashing. A physical solvent, particularly a physical solvent with a high boiling point, such as a dialkyl ether of polyethylene glycol is however preferred. This is suitable for a most advantageous embodiment of the invention, wherein a stripper is used at elevated temperature, for instance 100-200⁰C with the intention that the solvent remains in the liquid state.

According to the invention, a removal stream of solvent containing VOCs and any water is taken away from the recirculation circuit and moved to a reclaiming unit for further separation of the VOCs and water from the solvent. The removal stream is divided out of the solvent recirculation circuit in or directly downstream of the first treatment means, and thus upstream of the second treatment means. It has been found that the removal stream may for instance be 0.5% to 10% of the solvent stream in the recirculation circuit. The magnitude of the removal stream depends strongly on the type of VOCs to be removed and on any specifications for the purified gas with respect to the type of VOC to be removed. For example in the case of biogas, one relevant type of VOCs is formed by terpenes. One of the most volatile terpenes in biogas is alpha-pinene. The concentration of terpenes in the purified gas typically should not exceed 1 to 2 ppm. The removal stream is then in the order of 2% to ensure sufficient removal of alpha-pinene. In the reclaiming unit, the removal stream is suitably treated to lower the concentration of VOCs and water. In this manner, the VOC concentration in the recirculation circuit is stabilized. According to the invention, the reclaiming unit thereto comprises treatment means for treatment with a gas. More particularly, these treatment means are embodied as a stripper. The reclaiming unit may contain further means so as to increase the efficiency, and therewith limit the flow rate of removal stream.

It has been found in investigations leading to the present invention, that the use of solvent absorption for the removal of VOCs and CO2 may reduce the need for recirculation of the purified gas back into the compressor. In conventional operations, such as the one described in WO2007/080169A1, the recirculation ratio is typically 1.32. This recirculation ratio is typically defined as the gas stream after the compression divided by the gas stream before compression. As an alternative to the recirculation ratio, it is also known in the art to refer to the double compression rate. The double compression rate is defined as the magnitude of the recirculation stream to be compressed for the second time relative to the magnitude of the feed stream and is expressed in %. The double compression rate corresponding to a recirculation ratio of 1.32 is 32%. According to the present invention, this recirculation ratio may be reduced to less than 1.3, preferably less than 1.25 or even less than 1.2. This reduction of the recirculation ratio has a major impact on cost effectiveness, since the compression is by far the most energy intensive and thus expensive step of the process - excluding the active carbon column used in the prior art.

The reduction of the recirculation ratio is particularly significant in an embodiment wherein the solvent absorber is combined with a membrane separation unit downstream of the solvent absorber. Rather than using the membrane separation unit for removing the bulk of the carbon dioxide, as in the prior art, it is used herein as an additional CO2 removing operation. In dependence of the size of the solvent absorber and the specifications for the purified gas, the membrane separation unit could even be left out. In an alternative arrangement, merely a portion of the gas treated by the solvent absorber needs to pass the membrane separation unit; i.e. a bypass around the membrane separation unit may be foreseen. In one example, the CO2 concentration of the treated gas ranges from 9 to 16 vol%. The specification on the CO2 content of purified gas is typically in the range of 0 to 10 vol%. However, an advantage of using both a solvent absorber and a membrane separation unit is that the solvent does not need to be very lean. As a consequence, regeneration of the solvent may be achieved by adiabatic flashing, which is considered a most economical regeneration method in terms of installed equipment and operational costs.

In one advantageous embodiment, the at least partially dried and compressed gas is contacted in the solvent absorber with a solvent in a substantially isothermal manner. This has the advantage that the absorption and desorption of carbon dioxide from the physical solvent occurs at substantially the same temperature. Thereto, the solvent circulation circuit further comprises, according to this embodiment, cooling means arranged downstream of said first and second cooling means to cool the solvent to a temperature substantially corresponding to a temperature of the compressed and at least partially dried gas. The use of the same temperature for absorption and regeneration prevents use of additional energy. Preferably, any cooling in the solvent recirculation circuit serves for compensation of heat losses with the environment. However, it is principally not excluded that another temperature would be used. In one important embodiment, the reclaiming operation comprises the steps of:
- Scrubbing a recirculation gas stream from the vapour-liquid separator with the removal stream in a scrubber;
- Stripping the stream of solvent in a stripper with a strip gas to obtain a solvent stream and a gas stream enriched in VOCs;
- Condensing at least part of the VOCs in a vapour-liquid separator into an outlet stream, wherein remaining gas is at least partially recirculated as the recirculation gas stream to the scrubber.

In this embodiment, a cycle of the VOCs is created. Therewith, the concentration of the VOCs can be maintained at a sufficiently high level that allows condensing at least part of the VOCs. The cycle of VOCs involves the scrubbed removal stream (primarily or substantially in a liquid state), the strip gas stream and the remaining partially condensed gas stream from the separator, which is preferably a three-phase separator. It is observed that this process could also be applied separately from the rest of the process, even though its most advantageous application is in the framework of the process as described herein before. It is further observed, as discussed before, that the reclaiming unit may also be operated without a scrubber. However, it has been found that the use of a scrubber, and the created cycle of VOCs leads to a very efficient process.

The yield of the overall process using the preferred reclaiming process may be further enhanced in several optimizations. First of all, the flash gas resulting from the first treatment means of the solvent recirculation circuit may be used, at least partially as the strip gas in the reclaiming unit. This embodiment is not only advantageous for minimization of gas use, but also enables that any VOCs in the strip gas can be added into the reclaiming unit and thus be used to increase the VOC concentration therein.

Furthermore, the solvent stream that is produced in the stripper and is at least largely stripped of any VOCs and water may further be heat exchanged with the scrubbed stream. The stripping process is suitably carried out at a temperature of 100-200°C, whereas the scrubbed stream may for instance be at room temperature or even below room temperature. The heat exchange reduces the need for warming up the solvent in the stripper with heat from an external source, for instance electricity from the grid or from solar panels. It may be implemented by means of one or a series of heat exchangers. They are suitably configured for countercurrent operation.

Preferably, the reclaimed solvent that may be substantially free of VOCs and water is returned to the solvent recirculation circuit. Suitably, the reclaimed solvent is added thereto in the second treatment means. In this second treatment means, the CO2 is typically flashed off. As a consequence, the resulting flash gas may consist almost entirely of CO2.

In one further embodiment, the liberated CO2 stream is scrubbed with the reclaimed solvent stream, prior to the addition of the latter to the solvent recirculation circuit. This allows obtaining a very dry CO2 stream that is suitable for subsequent liquefaction.

### Brief introduction to the figures

These and other aspects of the invention will be further elucidated with respect to the Figures, in which:
Fig. 1 shows schematically a first embodiment of the process and the system of the invention;
Fig. 2 shows schematically the reclaiming unit of the invention;
Fig. 3 shows schematically a second embodiment of the process and the system of the invention, and
Fig. 4 shows schematically a third embodiment of the process and the system of the invention.

### Detailed description of illustrated embodiments

The figures are purely schematical. Equal reference numerals in different figures refer to the same or corresponding elements. In the figures, solid lines are used to indicate a gas stream. Dotted lines are used to indicate a stream of solvent. Dash-dotted lines are used to indicate condensate streams, being in particular water and/or VOCs. It is understood that the feed gas used in the process has been pre-treated to remove hydrogen sulphide in known manner.

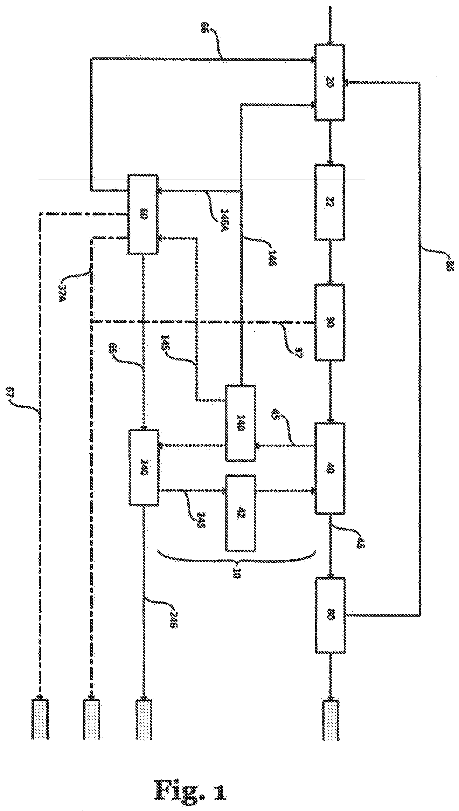

Fig. 1 shows schematically, in the form of a block scheme, a first embodiment of the system of the invention. According to the invention, a feed gas A is purified into purified gas B. Thereto, it passes subsequently a compressor 20, a cooler 22, a vapour-liquid separator 30, a solvent absorber 40 and a membrane separator 80. Part of the gas stream is recirculated from the membrane separation unit 80 to the compressor 20 via recirculation line 86. The solvent absorber 40 is present within a solvent recirculation circuit 10. In this embodiment, use is made of a physical solvent, which is regenerated by means of pressure reduction without a need for application of heat. The regeneration occurs by means of first treatment means 140 and second treatment means 240. The solvent circulation circuit 10 comprises a solvent line 45 out of the solvent absorber 40 and a further solvent return line 245 out of the second treatment means 240.

The first treatment means 140 is operated by reducing the pressure. The produced gas results from the instantaneous evaporation of a liquid in a pressure-reducing device, therewith cooling the stream to the evaporating temperature obtained at the reduced pressure. The flash gas 146 resulting from the first treatment means 140 is recirculated to the compressor 20. A portion 146A is split off to the reclaiming unit 60. A removed removal stream 145 of solvent is also taken off in or downstream of the first treatment means and transmitted to the reclaiming unit 60. After the treatment in the reclaiming unit 60, the solvent is returned via solvent return line 65 to solvent recirculation circuit. Preferably, the solvent line 65 is added to the second treatment means 240, wherein the pressure at the same level or even lower than in the solvent line 65. This addition avoids the need of an additional pump. However, it is not excluded that the solvent line 65 is added anywhere else to the solvent recirculation circuit 10 and/or that a pump is added. The second treatment means in which the pressure is lowered, result in liberation of the carbon dioxide through gas line 246. Typically, the bulk of the CO2 is liberated in the second treatment means (the low-pressure flash). This results in a CO2 product C.

The reclaiming unit 60 furthermore comprises an outlet for flash gas, which is returned to the compressor 20 via gas line 66. The reclaiming unit 60 additionally comprises an outlet for condensate. This condensate is led via condensate line 37A, The condensate may also contain amines like ammonia and CO2, particularly dissolved in water (and optionally converted to ions such as HCO₃⁻ by reaction with the condensed water). The reclaiming unit further contains an outlet for VOC condensate, that is led away via VOC condensate line 67.This results in an aqueous condensate product D, possibly a waste stream, and a VOC condensate product E, which for instance contains terpenes and siloxanes, dependent on the VOC content of the feed gas A.

In the operation of the system, the feed gas A is typically compressed in the compressor 20 to a pressure of 7 to 20 barg depending on the desired pipeline pressure or sales gas specifications. The compressor 20 also has further gas inlets, particularly for gas from the gas line 66 originating from the reclaiming unit 60, and recirculated gas coming via recirculation line 86 from the membrane separation unit 80, as well as for gas originating via line 146 from the first treatment means 140.

In a next step, the feed gas A is cooled to a temperature below 10°C, while preventing ice formation. Coolers are known per se to the skilled person. Preferably, use is made of a two-step cooling process. The first cooling step is done in an air cooled condenser while the second cooling step is done in a condenser cooled with a chiller.

A further cooler 42 is present in the solvent return line 245 of the solvent recirculation circuit 10. This cooler 42 brings the solvent back to a temperature below 10°C, for instance 5°C or lower prior to the entry of the solvent absorber 40. It is observed that the temperatures reached in the cooler 22 and the cooler 42 are suitably substantially the same, so as to have a truly isothermal absorption process in the solvent absorber 40. However, it is not excluded that some temperature variations occur, wherein the dried and compressed gas is for instance in the range of 5-10⁰C, whereas the solvent entering the absorber 40 has a temperature below 5°C. This is acceptable and deemed a substantially isothermal absorption process.

In the following step, condensate is removed in a vapour-liquid separator 30. The condensate is led away via condensate line 37. Such vapour-liquid separators are known per se. An example is a knockout drum.

The now partially dry and pressurized gas is sent to a pressurized solvent absorber 40. The absorber 40 is for instance trayed or packed. The pressurized gas is suitably contacted counter currently with regenerated physical solvent from the solvent return line 245 at a temperature below 10°C while preventing ice formation. The use of such a low temperature is beneficial, as the methane over CO2 selectivity increases with decreasing temperature while the overall CO2 capacity of the physical solvent increases. The treated gas leaves the absorber 40 virtually dry (dew point <-30°C) and nearly free of VOC's (<10 ppm or less, depending on the reclaimer operation) via treated gas line 46. It is observed that the VOC concentration is understood not substantially to depend on the inlet concentration of the VOC in the feed gas A, but only on the VOC concentration in the physical solvent entering the absorber 40. This VOC concentration is controlled by the reclaimer unit 60 which will be described later. The CO2 concentration of the treated gas in the treated gas line 46 typically ranges from 9 to 16 vol%.

In this embodiment, the treated gas line 46 brings the treated gas to the membrane separation unit 80. Herein, the CO2 concentration of the gas is modified so as to be in the specified range for purified gas B. In one embodiment, this concentration ranges from 9 to 16 vol% in the treated gas before membrane separation, for instance 11-14 vol%. After membrane separation, the CO2 concentration is in the range of 0-10%. The exact level of CO2 in the purified gas coming from the membrane separation unit 80 may be controlled in accordance with specifications. Normally membranes are damaged by condensation of water and loose selectivity when VOC's are present in the gas. VOCs need to be removed from the gas by using costly activated carbon. Water is removed by a drying step consisting of cooling the gas, separating the condensate and finally reheating the gas so condensate formation in the membranes is prevented. This mode of operation causes membrane processes to be normally operated at 20-25°e.

According to the present invention, no reheating of the treated gas in treated gas line 46 is necessary. This enables operating of the membrane separation unit 80 at any desired temperature, such as a temperature below room temperature, for instance at 0°C or even lower. In one embodiment, the temperature is the outlet temperature of the absorber. Such operation of the membrane separation unit 80 at reduced temperature is beneficial, since the CO2 over methane selectivity increases with decreasing temperature. The selectivity at for example 0°C is 60% higher than at 25°C. Since the treated gas coming from the absorber 40 in the process of the invention is virtually dry and free of VOCs, it is perfectly suited for treatment at or below the freezing point of water, i.e. 0°C or lower. Preferably, use is made of state-of-the art gas treatment membranes like for example Sepuran supplied by Evonik.

Due to the process of the invention wherein a solvent absorber 40 is used, and particularly in combination with the membrane separation unit 80, a reduced recycle ratio is achieved. The recirculation line 86 leads last amounts of CO2 removed from the treated gas in the membrane separation unit 80 together with a small amount of methane and even less water, to the inlet of the compressor 20. The thus resulting purified gas B that leaves the membrane separation unit 80 is dry (dew point <-40°C), nearly free of VOCs (<10 ppm or less, depending on the reclaimer operation) and is provided with a CO2 concentration between 0 and 10 vol%. The exact CO2 concentration in the purified gas B can be fine tuned by adjusting the pressure of the permeate in the membrane separation unit 80. Herein, lowering the permeate pressure results in a reduced CO2 concentration in the purified gas B.

It is observed that the use of a membrane separation unit 80 in combination with a solvent absorber 40 is also beneficial, as it allows a more robust and simplified configuration of the solvent recirculation circuit 10. Particularly, the first and second treatment means 140, 240 in the solvent recirculation circuit 10 can then be embodied as adiabatic flash vessels. Regeneration by adiabatic flashing is the most economical regeneration method with respect to CAPEX as well as OPEX. Even the temperature drop in the second treatment means, a 'low pressure flash vessel' as will be discussed hereinafter, which is per se detrimental to the regeneration process, does not have a negative impact on the overall process. It turns out that CO2 concentrations of 9 to 16% in the treated gas line 46 are easily attained and the membrane unit 80 can easily remove the remainder of the CO2 without adding much to the overall recycle ratio. If however, no membrane separation unit 80 were present and the process should nevertheless be sufficiently versatile for variations both in the feed gas A and to the purified gas B, the regeneration might become too expensive. Particularly, if a 10% CO2 concentration would be needed in the purified gas B, the pressure in the solvent absorber 40 should be at least 10 bara and preferably 14 bara to achieve sufficient mass transfer. If a lower CO2 concentration were desired than 10vol%, the pressure in the absorber 40 would even be higher, leading to very high compression costs, in combination with adiabatic flash. As an alternative, the physical solvent should be regenerated by air stripping, temperature swing, vacuum flashing or a combination thereof. These techniques are not impossible, but less cost-effective than adiabatic flash operations and have disadvantages. Disadvantages of regeneration by air stripping include dilution of the CO2 product, introduction of additional O2 in the purified gas and oxidation of the physical solvent. Temperature swing regeneration needs repeated heating and cooling of the physical solvent, which is adding to the overall energy consumption making the process uneconomical. Furthermore, special measures should be taken to avoid evaporation losses of the physical solvent adding to the total CAPEX of the process. Vacuum flash regeneration has several disadvantages relating to evaporation losses of the physical solvent, NPSH issues and high energy and investment costs.

In operation, the physical solvent leaving the absorber 40 via solvent line 45 has absorbed most of the CO2 and nearly all water and VOC's. Together with the CO2 some of the methane is absorbed, however at low absorption temperatures (<10°C) the selectivity for CO2 over methane is high. In order to retrieve most of the absorbed methane the physical solvent is regenerated using first and second treatment means 140, 240, which are in this embodiment two adiabatic flash vessels. The first flash vessel 240 is preferably operated at an intermediate pressure (2 to 6 barg) in order to reduce methane losses. The flash gas from the first flash vessel is recycled to the inlet of the compressor 20 via gas line 146. A small part of the flash gas 146A is first sent to the reclaimer unit 60 to be used as a strip gas before it is recycled to the inlet of the compressor 20 via gas line 66. From the first treatment means 140 the physical solvent continues within the solvent recirculation circuit 10 to the second treatment means 240, which is in this embodiment a low pressure flash vessel. Herein, the pressure will normally be 0 bar but can range from 0.5 barg to vacuum. If post treatment of the CO2 gas is needed, for example when the CO2 product is to be liquefied, the pressure in the low pressure flash may range from 0 to 0.2 barg. The regeneration of the physical solvent coming from the absorber40 with respect to CO2 can be done by simple flashing off the CO2 gas at a lower pressure in the second treatment means 240. The flash gas 246 from the low pressure flash 240 suitably consists of nearly pure CO2 at about 0 barg. This means that the physical solvent in the solvent return line 245 coming from the flash vessel 240 is in equilibrium with CO2 gas with a partial pressure of 1 bar.

In the physical solvent reclaiming unit 60, the water and VOCs from the removal stream 145 are removed that would otherwise accumulate over time in the solvent recirculation circuit 10 and eventually result in a failing process. While a major part of all water and VOCs is removed by condensation in the cooler 22 and separated in vapour-liquid separator 30, remaining water and VOCs will be transported with the dried and compressed gas to the solvent absorber 40 and will be usually available at saturation concentrations in the at least partially dried and compressed gas. The water and VOCs will absorb into the physical solvent in the absorber 40 according to Raoult's law. With insufficient removal of these impurities from the physical solvent, the mole fractions of water and VOCs in the solvent circulation circuit 10 could easily exceed 0.2. Therefore, a small side stream varying from 0.5% to 10 volume% of the total physical solvent in the solvent line 45 of the solvent circulation circuit 10 is removed for purification. The size of this removal stream 145 depends strongly on which type of VOC needs to be removed and on the relevant specifications for the purified gas B. For example in the case of biogas the total amount of terpenes in the purified gas B should typically not exceed 1 to 2 ppm. And in the case of alpha-pinene, which is one of the most volatile terpenes in biogas, the size of the removal stream 145 would be less than 2% of the total physical solvent recycle.

While it is deemed beneficial that the removal stream 145 is continuously removed from the solvent circulation circuit 10, it is not excluded that the removal would be carried out batchwise, or semi-continuously (i.e. as batches that are regularly removed and then combined). One preferred implementation is however continuous, since that avoids the provision of a separate pump for the removal stream 145. A valve at the inlet of the reclaiming unit 60, under control of a system controller appears sufficient. As a general observation, it will be understood that the control of pressures and temperatures in the process and system of the invention are to be carried out by means of a controller. The controller is suitably provided with software and settings that ensure that the process is well controlled rather than running away, i.e. and that pressures and temperatures and flows in different portions of the system are balanced.

It is observed that in the preferred option the generated flash gas in the first treatment means 140 is (at least) partially used for the reclaiming. This allows that no blower is needed for the transfer of flash gas. Moreover, a lot of gas is available. In US8,840,708, gas is sent to the third absorber from the third flash vessel. This has the risk that there would not be sufficient gas to absorb the contaminants in the solvent in the third absorber. Furthermore, in comparison to the system in said patent, a higher strip temperature, for instance up to 200°C is feasible. With the configuration of the invention, it turns out feasible to achieve strict gas specifications of at most 3 ppm terpenes and a water dew point of -32°C.

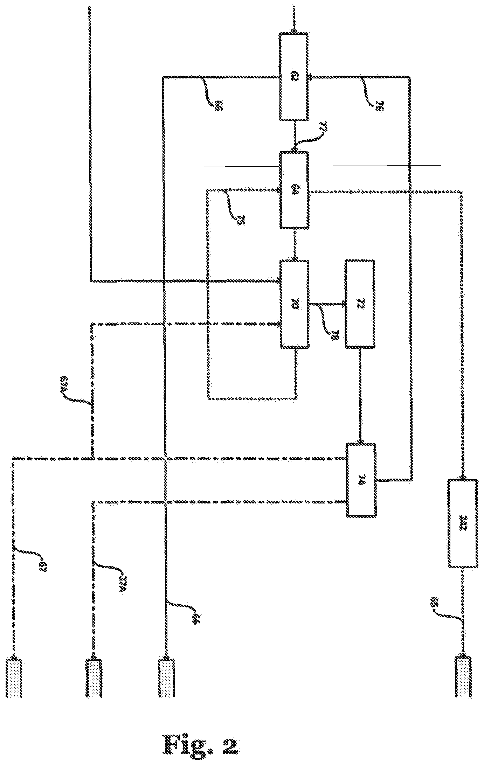

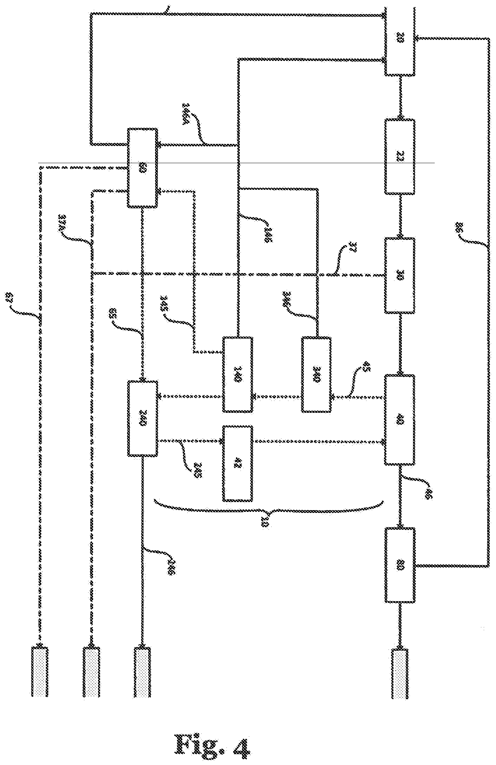

That does not appear feasible at all in the system disclosed in US8,40,708. In fact, the low water dew point achieved in the invention (even up to less than -50°C, may be arrived by the partial reclaiming of solvent in the solvent recirculation circuit. This partial reclaiming, suitably of less than 10%, preferably even in the range of 0.2-3%, such as 0.5-2%, means that the main portion of the solvent remains as is. Comparatively, the system of US8,840,708 does not allow to remove water and VOCs to an extent sufficient so as to meet the said strict gas specifications of green gas. Particularly, in Fig. 2 the solvent stream 116 is not heated sufficiently for the removal. Moreover, in the embodiment of Fig.4, it is specified that CO2 is stripped in the ancillary absorber with water saturated air. In fact, it appears that the amount of VOCs and water that should be removed in the absorber 14' in Fig. 4 should be at least 10 times as high as disclosed in order to meet the said specifications imposed by law.

Figure 2 shows a block scheme of the reclaiming unit 60. The reclaiming unit 60 comprises a scrubber 62, a stripper 70, a condenser 72 and a phase-separator 74 as its prime components. These components are interconnected such that a condensation circuit is generated comprising a feed stream 77, a partially condensed gas stream 78 enriched in VOCs and water and a recirculated gas stream 76. In the scrubber 62, the VOC content of the recirculated gas stream 76 is added into the feedstream 77, which is based on a solvent, preferably a physical solvent. In the stripper 70 the VOCs are transferred from the physical solvent onto a strip gas 146A to form gas stream 78. After cooling, in the shown embodiment in a separate condenser 72, part of the VOCs are condensed in the separator 74 to generate a VOC condensate stream in VOC condensate line 67. In this embodiment, use is made of a three-phase separator to separate an aqueous condensate into aqueous condensate line 37A, condensed VOCs and a remaining gas stream. While such three-phase separator is very beneficial, it is not excluded that alternative implementations are used. Essential is that part of the VOCs is separated from the stream 78. For energy efficiency, the physical solvent stream 75 from the stripper is heat exchanged in heat exchanger 64 with the feed stream 77 and thereafter returned to the solvent circulation circuit 10 via solvent return line 65. Typically, the VOC concentration in the stream 145 prior to entering the scrubber 62 is in the order of 1%. The strip gas 146A typically contains approximately 0-2 ppm of VOCs. The gas stream 78 however has a VOC concentration that is higher than 1000 ppm, under steady state operation conditions. The recirculated gas stream 76 is typically saturated with VOCs and with water. Thus, due the transfer of the VOCs and water from solvent to strip gas and back via the recirculation line 76 and the scrubber 62, the VOC concentration can be maintained at concentration levels that are far higher than those in the removal stream 145 and the gas stream 146A entering the reclaiming unit 60.

In a preferred embodiment, the scrubber 62 is a packed absorber. More preferably, the stripper 70 is provided with an upper trayed section and a packed bottom section. The packed sections may also be replaced by trayed sections. The removal stream 145 of the physical solvent comes from the first treatment means 140 (see figure 1) and enters the scrubber 62 of the reclaiming unit 60. This particularly occurs at the top at nearly atmospheric conditions. The solvent is contacted in the scrubber 62 with the recirculated gas 76 coming from the separator 74. The recirculated gas 76 is strip gas saturated with VOCs and water. These VOCs and the water are absorbed in the scrubber 62 before the strip gas is recycled to the inlet of the compressor 20 (figure 1) via gas line 66. The now even more enriched physical solvent stream (i.e. feed stream) 77 is sent to a heat exchanger 64 where it exchanges heat with the purified and hot physical solvent 75 coming from the stripper 70. After heat exchanging the solvent is led through the solvent return line 65 to the solvent circulation circuit 10. It suitably passes a further cooler 242, where it is cooled down to a suitable temperature, for instance less than 10 °C, or even less than 5°C. It is however observed that the cooling down in the cooler 242 may be tuned in combination with the cooling in cooler 42 (see figure 1): if the physical solvent is cooled in further cooler 242 to for instance 0°C, cooling in the cooler 42 may be very limited, or in certain embodiment, cooler 42 may not be necessary at all. Conversely, the function of cooler 242 may also be taken over by cooler 42.

The heated feed stream 77 is transmitted to the stripper 70. In one specific embodiment, the feed 77 enters the packed column of the stripper 70 just below the trayed section. At the bottom of the stripper flash gas 146A coming from the first treatment means 140 (figure 1) is introduced in the heated section of the stripper 70. Preferably, the stripper is configured such that the flash gas 146A moves counter currently to the solvent coming from the top. At the bottom of the stripper 70, the solvent is collected and electrically heated to 100-200°C. Due to this heating and the use of a main heat exchanger 64, the stripping process is carried out at temperatures between 100 and 200°C. The flash gas stream 146A is typically dry and usually virtually free of VOCs. It is not necessary to use all the flash gas 146 coming from the first treatment means 140. Anything between 5 and 100% may be enough.

Due to the comparatively high temperature in the stripper 70 high stripping factors are obtained and all water and VOCs are carried to the top into a gas stream 78, and to a cooler 72. A main part of the water and VOCs is condensed and sent to a separator 74 for separation of water and the VOCs into VOC condensate line 67 and aqueous condensate line 37A. The separator 74 is for instance embodied as a settler. A small part of the VOCs are refluxed from the VOC condensate line 67 to the stripper in order to wash out the physical solvent from the strip gas (resulting in stream 78) and to reduce evaporation losses of the physical solvent. The solvent washing section suitably comprises 1 or more separation trays. Once the solvent has reached the bottom section of the stripper 70 and has been heated, it is free of water and VOCs. It is then suitable for transport the main heat exchanger 64, where it is cooled while heating the incoming rich feed stream 77 from the scrubber 62.

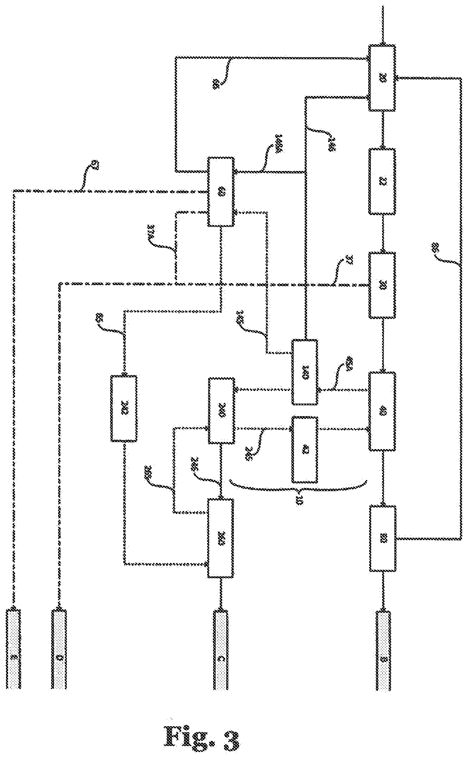

Figure 3 shows a second embodiment of the system of the invention. This system is optimized to achieve an extremely dry CO2 product, more particularly a CO2 product that is sufficiently dry for liquefaction. However, it is not excluded that this embodiment is applied even in other conditions without the need for CO2 liquefaction. Herein, the solvent return line 65 is not coupled directly to the second treatment means 240. Rather, the solvent return line 65 is led to a further absorber 260, and is then led, via line 265 to the second treatment means 240. In this embodiment, the CO2 gas 246 coming from the low pressure flash vessel 240 is scrubbed in the scrubber 260 by the reclaimed and purified physical solvent 65 coming from the reclaimer 60.

Figure 4 shows a third embodiment of the system of the invention. Herein, the solvent circulation circuit 10 comprises a third treatment means 340 in addition to the first and the second treatment means 140, 240. The third treatment means 340 is effectively arranged upstream of the first treatment means 140. In this embodiment, the third treatment means is again embodied as an adiabatic flash vessel. The pressures in the first, second and third treatment means 140, 240, 340 are controlled such as to be intermediate, low and high, comparatively to each other, and particularly in the context of the pressures used within the system. The flash gas 346 coming from the third treatment means 340 is subsequently combined with the flash gas 146 coming from the first treatment means 140. An advantage of this embodiment is a further reduction of the recycle ratio, while maintaining a very low methane slip. In the case of biogas or landfill gas treatment the addition of an additional flash vessel 340 decreases the overall energy demand by 0.01 kWhe/Nm3 of feed gas. While not specified, it will be understood that the third embodiment shown in Figure 4 may be combined with the second embodiment shown in Figure 3. Again, the reclaiming unit 60 is preferably embodied as shown in Figure 2. However, it is not excluded that variations are applied.

### Example

### Example 1: Upgrading of 1000 Nm3/h Biogas with 1000 ppm alpha-pinene

In this example the upgrading of 1000 Nm3/h of biogas is described using the process and system of the invention. The biogas A is coming from a household waste digester and contains significant amounts of terpenes. In this example it contains 1000 ppm of alpha-pinene, one of the most volatile terpenes present in biogas. H2S has been removed before the biogas is processed in the system of the invention. Reference will be made in the following to the Figures 1 and 2.

First, feed gas A is mixed with the recycle streams 146 66 and 86 coming from the high pressure flash 140, reclaimer unit 60 and membrane unit 80 respectively. The total flow of recycle streams is 180 Nm3/h. This means that the recycle ratio is 1.18 or that the double compression rate is 18% The collected gas streams are entered into the compressor 20, that is in this example embodied as an oil screw compressor. Herein the feed A is compressed to 11 bara and subsequently cooled to 5°C in the cooler 20. The vapor pressure of alpha-pinene is 1.73 mbar at 5°C and at 5°C and 11 bara 81% of all alpha-pinene is condensed together with the 42.8 kg/h of water. In total about 47.7 kg/h of condensate is separated from the gas steam into condensate line 37 using the gas/liquid separator 30.

The cooled, dried and compressed gas is transmitted to the solvent absorber 40, that is in this implementation packed with 5 m of Mellapak 250.Y and has a diameter of 0.5 m. The gas is scrubbed in the absorber 40 with 29.000 kg/h of physical solvent. The treated gas 46 leaving the absorber 40, in a flow rate of 617 Nm3/h, is now dry and contains 41 ppm of water and only 1 ppm alpha-pinene. The CO2 concentration is 12.4 vol%. This gas 46 is excellently suited for membrane treatment and it is sent to a membrane unit 80 consisting of 15 SEPURAN GREEN (100x1200) Membranes. At 1 bara permeate pressure the CO2 concentration of the purified gas B is 7.22 vol%, whereas at a permeate pressure of 1.9 bara the CO2 concentration is 10.0 vol%.

The physical solvent is regenerated in the solvent circulation circuit 10. The first treatment means 140, embodied as a high pressure flash, is operating at a pressure of 3.7 barg. The second treatment means 240, embodied as a low pressure flash, is operating at 0 barg. As will be understood, the terms high and low are used herein in their relative sense.

From the 29740 kg/h of physical solvent coming from the high pressure flash 140 only 325 kg/h is sent to the reclaimer unit 60 via removal line 145. The reclaimer unit 60 of this example comprises a scrubber 62 with a packed height of 2 meters and a diameter of 0.15 m. The packing type is Mellapak 250.Y. About 99.8 Nm3/h saturated strip gas 76 recirculated from the stripper 70 via the condenser 74 enters the scrubber 62, particularly at the bottom. From the scrubber 62, the solvent stream 77 is heated in the heat exchanger 62 and enters the stripper 70, particularly at the top of the stripper 70. The solvent obtains a temperature of 150°C within the stripper 70, due to the hot solvent coming from the bottom of the stripper 70. The solvent in the bottom is electrically heated tot 175°C. The total heating duty is 14.9 kW.

About 98.5 Nm3/h of flash gas 146A from the first treatment means 140 (high pressure flash) is used to strip all terpenes and water from the physical solvent stream 77. The enriched strip gas 78 leaves the stripper 70 and is cooled and partially condensed in a cooler 72 and separated in a separator 74. A condensate consisting of water (0.5 kg/h) and alpha-pinene (1.1 kg/h) is formed into VOC condensate line 67 and aqueous condensate line 37. A small reflux 67A of 6 kg/h is needed to reduce or even eliminate physical solvent losses. The stripper 70 has packed height of 3 meters and a diameter of 0.2 m. The packing type is Mellapak 250.Y.

Table 1 demonstrates the changes in composition of the biogas according to the invention, using the settings of the example. For the membrane separation 80, a permeate pressure of 1 bara has been used. The methane concentration is increased from 52.2 vol% in the feed gas A to 90.2 vol% in the purified gas B. The carbon dioxide content is reduced from 41.3 vol% to 7.6vol%. As is apparent from Table 1, the membrane separation results in a further reduction of close to 40% relative to the CO2 content in the treated gas 46. The content of the VOC alpha-pinene is reduced from 1000 ppm to 1 ppm. This result is achieved by means of the condenser 30 and the solvent absorber 40.

**Table 1. Composition of Biogas**

| *Component* | *Concentration of feed A* | *Concentration in treated gas (46) downstream of solvent absorber* | *Concentration in purified gas B,* |
|---|---|---|---|
| Methane | 52.2 vol% | 85.6 vol% | 90.2 vol% |
| CO2 | 41.3 vol% | 12.4 vol% | 7.6 vol% |
| Water | 5.4 vol% | 0.0041 vol% | 0.0010 vol% |
| H2S | <3 ppm | <3 ppm | <3 ppm |
| Nitrogen | 0.9 vol% | 1.6 vol% | 1.6 vol% |
| Oxygen | 0.2 vol% | 0.4 vol% | 0.4 vol% |
| Alpha-pinene | 1000 ppm | 1 ppm | 1 ppm |

Table 2 shows the composition of the CO2 product. The methane composition is herein only 1.2%, which demonstrates that the loss in the process is very small. The overall methane yield of the process is 99.1%.

**Table 2. CO₂ product gas 246 coming from the second treatment means 240**

| *Component* | *Concentration* |
|---|---|
| Methane | 1.2 vol% |
| CO2 | 98.7 vol% |
| Water | 0.043 vol% |
| H2S | <3 ppm |
| Nitrogen | 0 vol% |
| Oxygen | 0 vol% |
| Alpha-pinene | 0 ppm |

**Table 3. Duties of the process divided for the different categories**

| *Category* | *Duty* |
|---|---|
| Compression | 153.6 |
| Heating | 14.9 |
| Cooling | 4.5 |
| Pumping | 10.2 |
| Total | 183.2 |

Table 3 shows the duties for the different categories in the process of the invention. The major part (83.8%) of the energy is consumed by the compressor. This compressor duty is needed for every upgrading process for biogas. Biogas is generally available at a pressure of 0 - 50 mbarg. The pipeline specifications require a green gas pressure of at least 8 barg. Pressurizing 1000 Nm3/h of biogas to 8 barg without any treatment would consume about 123.7 kW electrical power.

Thus, in summary, the present invention relates to a process and a system for the purification of feed gas. The system comprises a compressor (20) with an inlet for feed gas (A), an inlet for a recirculation gas stream (86), and an outlet for compressed gas; cooling means (22) for cooling the compressed gas; a gas-liquid separator (30) arranged downstream of the cooling means (22) for removal of condensate (37) formed during treatment of the compressed gas with the cooling means (22). The system further comprises a solvent absorber (40) for absorbing impurities including volatile organic compounds (VOCs) and carbon dioxide from the compressed and at least partially dried gas, and a separation unit (80) provided with a recirculation outlet for a recirculation gas stream (86), and an outlet for the thus purified gas (B). The solvent absorber (40) is arranged in a solvent circulation circuit (10) comprising a first and a second treatment means (140, 240) for regeneration of the solvent to remove absorbed impurities, said first treatment means (140) being configured for operating at a higher pressure than the second treatment means (240). The solvent recirculation circuit (10) is configured for splitting off a removal stream (145), which occurs in or directly downstream of the first treatment means. The removal stream is suitably again added to the solvent recirculation circuit before or in the second treatment means.

The first treatment in the first treatment means involves a pressure reduction to generate flash gas, and a reclaimer unit (60) is present for reducing the VOC concentration of the removal stream (145), a solvent outlet (65) of the reclaiming unit (60) being coupled to the solvent recirculation circuit (10). The removal stream is suitably at most 10volume% of the total solvent in the solvent recirculation circuit. The system is used for the process of purification of feed gas.

In one suitable embodiment, the solvent absorber is operated at a temperature of 0 to 10°C. In a further suitable embodiment and aspect, the reclaimer unit comprises a condensation circuit comprising a scrubber, a stripper, a cooler and a vapour-liquid separator. The VOCs are then separated from a feed stream comprising a solvent. This separation comprises the steps of (1) scrubbing a recirculation gas stream from the vapour-liquid separator with the feed stream in the scrubber; (2) stripping the feed stream in the stripper with a strip gas to obtain a solvent stream and a gas stream enriched in VOCs; (3) condensing at least part of the VOCs present in the gas stream enriched in VOCs in the cooler, and (4) separating condensed VOCs into an outlet stream, wherein remaining gas is at least partially recirculated as the recirculation gas stream to the scrubber.

In again a further aspect, this condensation circuit is part of an apparatus for the separation of VOCs from a feed stream, comprising a condensation circuit provided with: (1) A scrubber comprising an inlet for the feed stream comprising a solvent with VOCs and an outlet for the feed stream enriched in VOCs, an inlet for a recirculated gas stream, an outlet for a scrubbed gas stream; (2) a stripper arranged downstream of the solvent scrubber, with an inlet for strip gas, an inlet for the feed stream, an gas outlet for a gas stream enriched in VOCs and an outlet for a solvent stream; (3) a cooler arranged downstream of the stripper and configured for cooling the gas stream; (4) a vapour-liquid separator coupled to the cooler, and having an outlet for a liquid stream and a recirculation outlet for a gas stream, wherein said gas stream from the recirculation outlet is at least partially recirculated to the scrubber.

Preferably, in relation to the separation of VOCs, the solvent stream is heat exchanged with the feed stream in a heat exchanger downstream of the scrubber. In another embodiment in relation thereto, part of the outlet stream of condensed VOCs is recirculated to the stripper. In again a further embodiment, the gas stream enriched in VOCs is cooled downstream of the stripper to a temperature below 10°C, preferably below 5°C. Suitably, the feed stream further comprises water, and at least part of the water is condensed in the condensing step and then separated into a second aqueous outlet stream.

## Claims

1. A process for purification of a feed gas comprising the steps of:
- compressing the feed gas;
- removing water from the compressed gas;
- treating the at least partially dried and compressed gas for the removal of impurities, Wherein the treatment step comprises passing the at least partially dried and compressed gas through a solvent absorber (40) to remove volatile organic compounds (VOCs) and carbon dioxide and any water, wherein the solvent absorber (40) is arranged in a solvent circulation circuit (10) comprising a first and a second treatment means (140, 240) for regeneration of the solvent to remove the absorbed impurities, which regeneration comprises:
- operating the first treatment means (140) at a higher pressure than the second treatment means (240), wherein the treatment in the first and the second treatment means comprises a pressure reduction configured to generate flash gas;
- dividing part of the solvent from the solvent recirculation circuit (10) in a removal stream (145), which division occurs in or downstream of the first treatment means (140) and upstream of the second treatment means (240),
- reducing the VOC concentration of the removal stream (145) comprising the step of stripping the solvent by means of a strip gas, wherein the strip gas is flash gas (146A) coming from the first treatment means (140) in the solvent recirculation circuit (10), and thereafter
- returning the removal stream (65) to the solvent recirculation circuit (10).

2. The process of claim 1, wherein up to 10volume% of the solvent in the solvent recirculation circuit (10) is divided into the removal stream (145), preferably up to 5%, more preferably 0.5 to 2% by volume.

3. The process of claim 1 or 2, wherein the treated gas is further passed through a membrane unit (80) downstream of the solvent absorber (40) to reduce the carbon dioxide content of the gas to obtain purified gas.

4. The process as claimed in claim 1 or 2 or 3, wherein the treated gas is partially recirculated to the compressor (20), wherein a recirculation ratio is less than 1.3, preferably less than 1.2, wherein the recirculation ratio is defined as the ratio of gas flow after compression and feed gas flow before compression.

5. The process as claimed in claims 1-4, wherein the reduction of the VOC content in the removal stream (145) comprises the steps of:
- Scrubbing a recirculation gas stream (76) from a vapour-liquid separator (74) with the removal stream (145) in a scrubber (62);
- Stripping the scrubbed removal stream (77) in a stripper (70) with the said strip gas (146A) to obtain a solvent stream (75) and a gas stream (78) enriched in VOCs, and;
- Condensing at least part of the VOCs present in the gas stream enriched in VOCs (78) and separating them in the vapour-liquid separator (74) into an outlet stream (67), wherein remaining gas is at least partially recirculated as the recirculation gas stream (76) to the scrubber (62), and wherein the solvent stream is returned as the removal stream (75, 65) to the solvent recirculation circuit (10)..

6. The method as claimed in claim 5, wherein the feed stream (145, 77) further comprises water, and wherein at least part of the water is condensed in the condensing step and then separated into a second aqueous outlet stream (37A).

7. The process as claimed in claims 1-6, wherein the solvent stream (65) is added to the solvent recirculation circuit (10) in the second treatment means (240).

8. The process as claimed in any of the preceding claims, wherein carbon dioxide is liberated in the regeneration of the solvent in the second treatment means (240), and preferably wherein the resulting carbon dioxide stream (246) is scrubbed with the solvent stream (65) prior to the addition of the solvent stream (65) to the solvent recirculation circuit (10) .

9. The process as claimed in any of the preceding claims, wherein the feed gas is chosen from biogas, landfill gas and/or natural gas, and wherein hydrogen sulphide has been removed from the feed gas prior to compression.

10. The process as claimed in any of the preceding claims, wherein the at least partially dried and compressed gas is contacted in the solvent absorber (40) with a solvent in a substantially isothermal manner.

11. A system for the purification of feed gas comprising:
- a compressor (20) with an inlet for feed gas, an inlet for a recirculation gas stream (86), and an outlet for compressed gas;
- Cooling means (22) for cooling the compressed gas;
- A gas-liquid separator (30) arranged downstream of the cooling means (22) for removal of condensate formed during treatment of the compressed gas with the cooling means (22);
- Means for absorbing impurities (40, 80) including volatile organic compounds (VOCs) and carbon dioxide from the compressed and at least partially dried gas, provided with a recirculation outlet for a recirculation gas stream (86), and an outlet for the thus purified gas,
wherein
- the means for absorbing impurities (40, 80) comprise a solvent absorber (40), which is provided with an inlet for solvent, and with an outlet for the thus treated gas;
- the solvent absorber (40) is arranged in a solvent circulation circuit (10) comprising a first and a second treatment means (140, 240) for regeneration of the solvent to remove absorbed impurities, said first treatment means (140) being configured for operating at a higher pressure than the second treatment means (240),
- the solvent recirculation circuit (10) is configured for splitting off a removal stream (145) in or downstream the first treatment means (140) and upstream the second treatment means (240),
- a reclaimer unit (60) is present for reducing the VOC concentration of the removal stream (145), wherein the reclaimer unit (60) comprises a stripper (70) for stripping the solvent by means of a strip gas (146A), wherein the strip gas is flash gas (146A) coming from the first treatment means (140) in the solvent recirculation circuit (10), and wherein a solvent outlet (65) of the reclaiming unit (60) is coupled to the solvent recirculation circuit (10).

12. The system as claimed in claim 11 , wherein the reclaimer unit (60) comprises an apparatus for the separation of volatile organic compounds (VOCs) from the removal stream (145, 77), comprising a condensation circuit provided with:
- A scrubber (62) comprising an inlet for the feed stream (145) comprising a solvent with VOCs and an outlet for the feed stream (77) enriched in VOCs, an inlet for a recirculated gas stream (76), an outlet for a scrubbed gas stream (66);
- A stripper (70) arranged downstream of the solvent scrubber (62), with an inlet for strip gas (146A), an inlet for the feed stream (77), an gas outlet for a gas stream (78) enriched in VOCs and an outlet for a solvent stream (75);
- A cooler (72) arranged downstream of the stripper (70) and configured for cooling the gas stream (78);
- A vapour-liquid separator (74) coupled to the cooler (72), and having an outlet for a liquid stream (67, 37A) and a recirculation outlet for a gas stream (76), wherein said gas stream from the recirculation outlet is at least partially recirculated to the scrubber (62).

13. The apparatus as claimed in claim 12, wherein the vapour-liquid separator (74) is a three-phase separator with a first outlet for a liquid stream (67) primarily or substantially consisting of VOCs, a second outlet for an aqueous liquid stream (37A) and the recirculation outlet (76).

14. The system as claimed in any of the claims 11-13, wherein the means for absorbing (40, 80) further comprise a separation unit (80) downstream of the solvent absorber (40), said separation unit (80) being provided with the recirculation outlet (86) and the outlet for purified gas, which separation unit (80) is configured for further reducing a carbon dioxide content of the treated gas, and preferably is a membrane separation unit.

15. The system as claimed in any of the claims 11-14, wherein said solvent circulation circuit (10) further comprises cooling means (42) arranged downstream of said first and second treatment means (140, 240) to cool the solvent to a temperature substantially corresponding to a temperature of the compressed and dried gas.

## Patentansprüche

1. Vorgang zum Reinigen eines Einsatzgases, umfassend die Schritte:
- Komprimieren des Einsatzgases;
- Entfernen von Wasser aus dem komprimierten Gas;
- Behandeln des mindestens teilweise getrockneten und komprimierten Gases für die Entfernung von Verunreinigungen,
wobei der Behandlungsschritt ein Leiten des mindestens teilweise getrockneten und komprimierten Gases durch ein Lösungsmittelabsorbens (40) umfasst, um flüchtige organische Verbindungen (VOCs) und Kohlendioxid und jegliches Wasser zu entfernen, wobei das Lösungsmittelabsorbens (40) in einem Lösungsmittelzirkulationskreislauf (10) angeordnet ist, umfassend ein erstes und ein zweites Behandlungsmittel (140, 240) zur Regeneration des Lösungsmittels, um die absorbierten Verunreinigungen zu entfernen, wobei die Regeneration umfasst:
- Betreiben des ersten Behandlungsmittels (140) mit einem höheren Druck als das zweite Behandlungsmittel (240), wobei die Behandlung in dem ersten und dem zweiten Behandlungsmittel eine Druckreduzierung umfasst, die konfiguriert ist, um ein Flashgas zu erzeugen;
- Aufteilen eines Teils des Lösungsmittels aus dem Lösungsmittelrückführungskreislauf (10) in einen Entfernungsstrom (145), wobei die Aufteilung in oder stromabwärts des ersten Behandlungsmittels (140) und stromaufwärts des zweiten Behandlungsmittels (240) erfolgt,
- Verringern der VOC-Konzentration des Entfernungsstroms (145), umfassend den Schritt eines Strippens des Lösungsmittels mittels eines Strip-Gases, wobei das Strip-Gas Flashgas (146A), das von dem ersten Behandlungsmittel (140) in dem Lösungsmittelrückführungskreislauf (10) stammt, ist, und danach
- Zurückführen des Entfernungsstroms (65) zu dem Lösungsmittelrückführungskreislauf (10).

2. Vorgang nach Anspruch 1, wobei bis zu 10 Volumen-% des Lösungsmittels in dem Lösungsmittelrückführungskreislauf (10) in den Entfernungsstrom (145), vorzugsweise bis zu 5 %, mehr bevorzugt 0,5 bis 2 Volumen-%, aufgeteilt ist.

3. Vorgang nach Anspruch 1 oder 2, wobei das behandelte Gas ferner durch eine Membraneinheit (80) stromabwärts des Lösungsmittelabsorbens (40) geleitet wird, um den Kohlendioxidgehalt des Gases zu verringern, um gereinigtes Gas zu erhalten.

4. Vorgang nach Anspruch 1 oder 2 oder 3, wobei das behandelte Gas teilweise in den Kompressor (20) rückgeführt wird, wobei ein Rückführungsverhältnis weniger als 1,3, vorzugsweise weniger als 1,2, beträgt, wobei das Rückführungsverhältnis als das Verhältnis von Gasströmung nach Kompression und Einsatzgasstrom vor Kompression definiert ist.

5. Vorgang nach den Ansprüchen 1 bis 4, wobei die Verringerung des VOC-Gehalts in dem Entfernungsstrom (145) die Schritte umfasst:
- Waschen eines Rückführungsgasstroms (76) aus einem Dampf-Flüssigkeits-Abscheider (74) mit dem Entfernungsstrom (145) in einem Wascher (62);
- Strippen des gewaschenen Entfernungsstroms (77) in einem Stripper (70) mit dem Strip-Gas (146A), um einen Lösungsmittelstrom (75) und einen Gasstrom (78), der an VOCs angereichert ist, zu erhalten, und;
- Kondensieren mindestens eines Teils der VOCs, die in dem an VOCs (78) angereicherten Gasstrom vorhanden sind, und Abscheiden dieser in dem Dampf-Flüssigkeits-Abscheider (74) in einen Auslassstrom (67),
wobei verbleibendes Gas mindestens teilweise als der Rückführungsgasstrom (76) an den Wascher (62) rückgeführt wird, und wobei der Lösungsmittelstrom als der Entfernungsstrom (75, 65) an den Lösungsmittelrückführungskreislauf (10) rückgeführt wird.

6. Verfahren nach Anspruch 5, wobei der Zustrom (145, 77) ferner Wasser umfasst und wobei mindestens ein Teil des Wassers in dem Kondensationsschritt kondensiert und dann in einen zweiten wässrigen Auslassstrom (37A) abgeschieden wird.

7. Vorgang nach den Ansprüchen 1 bis 6, wobei der Lösungsmittelstrom (65) zu dem Lösungsmittelrückführungskreislauf (10) in dem zweiten Behandlungsmittel (240) hinzugefügt wird.

8. Vorgang nach einem der vorstehenden Ansprüche, wobei Kohlendioxid bei der Regeneration des Lösungsmittels in dem zweiten Behandlungsmittel (240) freigesetzt wird, und vorzugsweise wobei der resultierende Kohlendioxidstrom (246) vor dem Hinzufügen des Lösungsmittelstroms (65) zu dem Lösungsmittelrückführungskreislauf (10) mit dem Lösungsmittelstrom (65) gewaschen wird.

9. Vorgang nach einem der vorstehenden Ansprüche, wobei das Einsatzgas aus Biogas, Deponiegas und/oder Erdgas ausgewählt ist und wobei vor der Kompression Schwefelwasserstoff aus dem Einsatzgas entfernt wurde.

10. Vorgang nach einem der vorstehenden Ansprüche, wobei das mindestens teilweise getrocknete und komprimierte Gas in dem Lösungsmittelabsorbens (40) mit einem Lösungsmittel in einer im Wesentlichen isothermen Weise in Kontakt gebracht wird.

11. System für die Reinigung von Einsatzgas, umfassend:
- einen Kompressor (20) mit einem Einlass für Einsatzgas, einem Einlass für einen Rückführungsgasstrom (86) und einem Auslass für komprimiertes Gas;
- Kühlmittel (22) zum Kühlen des komprimierten Gases;
- einen Gas-Flüssigkeits-Abscheider (30), der stromabwärts des Kühlmittels (22) zum Entfernen eines Kondensats, das während der Behandlung des komprimierten Gases mit dem Kühlmittel (22) ausgebildet wird, angeordnet ist;
- Mittel (40, 80) zum Absorbieren von Verunreinigungen, die flüchtige organische Verbindungen (VOCs) und Kohlendioxid aus dem komprimierten und mindestens teilweise getrockneten Gas einschließen, die mit einem Rückführungsauslass für einen Rückführungsgasstrom (86) und einem Auslass für das so gereinigte Gas versehen sind,
wobei
- die Mittel (40, 80) zum Absorbieren von Verunreinigungen ein Lösungsmittelabsorbens (40) umfassen, das mit einem Einlass für Lösungsmittel und mit einem Auslass für das so behandelte Gas versehen ist;
- das Lösungsmittelabsorbens (40) in einem Lösungsmittelzirkulationskreislauf (10) angeordnet ist, umfassend ein erstes und ein zweites Behandlungsmittel (140, 240) zur Regeneration des Lösungsmittels, um absorbierte Verunreinigungen zu entfernen, wobei das erste Behandlungsmittel (140) zum Betreiben bei einem höheren Druck als das zweite Behandlungsmittel (240) konfiguriert ist,
- der Lösungsmittelrückführungskreislauf (10) konfiguriert ist, um einen Entfernungsstrom (145) in oder stromabwärts des ersten Behandlungsmittels (140) und stromaufwärts des zweiten Behandlungsmittels (240) abzuspalten,
- eine Rückgewinnungseinheit (60) zum Verringern der VOC-Konzentration des Entfernungsstroms (145) vorhanden ist, wobei die Rückgewinnungseinheit (60) einen Stripper (70) zum Strippen des Lösungsmittels mittels eines Strip-Gases (146A) umfasst, wobei das Strip-Gas ein Flashgas (146A), das von dem ersten Behandlungsmittel (140) in dem Lösungsmittelrückführungskreislauf (10) stammt, ist, und wobei ein Lösungsmittelauslass (65) der Rückgewinnungseinheit (60) mit dem Lösungsmittelrückführungskreislauf (10) gekoppelt ist.

12. System nach Anspruch 11, wobei die Rückgewinnungseinheit (60) eine Einrichtung für die Abscheidung von flüchtigen organischen Verbindungen (VOCs) aus dem Entfernungsstrom (145, 77) umfasst, umfassend einen Kondensationskreislauf, der versehen ist mit:
- einem Wascher (62), umfassend einen Einlass für den Zustrom (145), umfassend ein Lösungsmittel mit VOCs, und einen Auslass für den Zustrom (77), der an VOCs angereichert ist, einen Einlass für einen rückgeführten Gasstrom (76), einen Auslass für einen gewaschenen Gasstrom (66);
- einen Stripper (70), der stromabwärts des Lösungsmittelwaschers (62) angeordnet ist, mit einem Einlass für Strip-Gas (146A), einem Einlass für den Zustrom (77), einem Gasauslass für einen an VOCs angereicherten Gasstrom (78) und einem Auslass für einen Lösungsmittelstrom (75);
- einen Kühler (72), der stromabwärts des Strippers (70) angeordnet und zum Kühlen des Gasstroms (78) konfiguriert ist;
- einen Dampf-Flüssigkeits-Abscheider (74), der mit dem Kühler (72) gekoppelt ist und einen Auslass für einen Flüssigkeitsstrom (67, 37A) und einen Rückführungsauslass für einen Gasstrom (76) aufweist, wobei der Gasstrom aus dem Rückführungsauslass mindestens teilweise in den Wascher (62) rückgeführt wird.

13. Vorrichtung nach Anspruch 12, wobei der Dampf-Flüssigkeits-Abscheider (74) ein dreiphasiger Abscheider mit einem ersten Auslass für einen Flüssigkeitsstrom (67), der hauptsächlich oder im Wesentlichen aus VOCs besteht, einem zweiten Auslass für einen wässrigen Flüssigkeitsstrom (37A) und dem Rückführungsauslass (76) ist.

14. System nach einem der Ansprüche 11 bis 13, wobei die Mittel (40, 80) zum Absorbieren ferner eine Abscheidungseinheit (80) stromabwärts des Lösungsmittelabsorbens (40) umfassen, wobei die Abscheidungseinheit (80) mit dem Rückführungsauslass (86) und dem Auslass für gereinigtes Gas versehen ist, wobei die Abscheidungseinheit (80) konfiguriert ist, um einen Kohlendioxidgehalt des behandelten Gases weiter zu reduzieren, und vorzugsweise eine Membrantrenneinheit ist.

15. System nach einem der Ansprüche 11 bis 14, wobei der Lösungsmittelzirkulationskreislauf (10) ferner ein Kühlmittel (42) umfasst, das stromabwärts des ersten und des zweiten Behandlungsmittels (140, 240) angeordnet ist, um das Lösungsmittel auf eine Temperatur zu kühlen, die im Wesentlichen einer Temperatur des komprimierten und getrockneten Gases entspricht.

## Revendications

1. Procédé de purification d'un gaz d'alimentation comprenant les étapes consistant à :
- comprimer le gaz d'alimentation ;
- éliminer l'eau du gaz comprimé ;
- traiter le gaz au moins partiellement séché et comprimé pour l'élimination des impuretés,
Dans lequel l'étape de traitement comprend le passage du gaz au moins partiellement séché et comprimé à travers un absorbeur de solvant (40) pour éliminer les composés organiques volatils (COV) et le dioxyde de carbone et n'importe quelle eau, dans lequel l'absorbeur de solvant (40) est disposé dans un circuit de circulation de solvant (10) comprenant un premier et un second moyen de traitement (140, 240) pour la régénération du solvant pour éliminer les impuretés absorbées, laquelle régénération comprend :
- le fonctionnement du premier moyen de traitement (140) à une pression plus élevée que celle du second moyen de traitement (240), dans lequel le traitement dans les premier et le second moyens de traitement comprend une réduction de pression conçue pour générer une vapeur instantanée ;
- la division d'une partie du solvant du circuit de recyclage de solvant (10) dans un courant d'élimination (145), laquelle division se produit dans le premier moyen de traitement (140) ou en aval de celui-ci et en amont du second moyen de traitement (240),
- la réduction de la concentration en COV du courant d'élimination (145) comprenant l'étape consistant à extraire le solvant au moyen d'un gaz d'extraction, dans lequel le gaz d'extraction est une vapeur instantanée (146A) provenant du premier moyen de traitement (140) dans le circuit de recyclage de solvant (10), et ensuite
- le renvoi du courant d'élimination (65) au circuit de recyclage de solvant (10).

2. Procédé selon la revendication 1, dans lequel 10 % maximum en volume du solvant dans le circuit de recyclage de solvant (10) sont divisés en courant d'élimination (145), de préférence 5 % maximum, plus préférablement 0,5 à 2 % en volume.

3. Procédé selon la revendication 1 ou 2, dans lequel le gaz traité traverse en outre une unité de membrane (80) en aval de l'absorbeur de solvant (40) pour réduire la teneur en dioxyde de carbone du gaz pour obtenir un gaz purifié.

4. Procédé selon la revendication 1 ou 2 ou 3, dans lequel le gaz traité est partiellement remis en circulation vers le compresseur (20), dans lequel un rapport de recyclage est inférieur à 1,3, de préférence inférieur à 1,2, dans lequel le rapport de recyclage est défini comme le rapport de flux de gaz après la compression et de flux de gaz d'alimentation avant la compression.

5. Procédé selon les revendications 1 à 4, dans lequel la réduction du contenu de COV dans le courant d'élimination (145) comprend les étapes consistant à :
- épurer un courant de gaz de recyclage (76) provenant d'un séparateur vapeur-liquide (74) avec le courant d'élimination (145) dans un épurateur (62) ;
- extraire le courant d'élimination épuré (77) dans un dispositif d'extraction (70) avec ledit gaz d'extraction (146A) pour obtenir un courant de solvant (75) et un courant de gaz (78) enrichi en COV, et ;
- condenser au moins une partie des COV présents dans le courant de gaz enrichi en COV (78) et les séparer dans le séparateur vapeur-liquide (74) dans un courant de sortie (67),
dans lequel le gaz restant est au moins partiellement recyclé en guise de courant de gaz de recyclage (76) vers l'épurateur (62), et dans lequel le courant de solvant est renvoyé en guise de courant d'élimination (75, 65) au circuit de recirculation de solvant (10).

6. Procédé selon la revendication 5, dans lequel le courant d'alimentation (145, 77) comprend en outre de l'eau, et dans lequel au moins une partie de l'eau est condensée à l'étape de condensation et ensuite séparée en un second courant de sortie aqueux (37A).

7. Procédé selon les revendications 1 à 6, dans lequel le courant de solvant (65) est ajouté au circuit de recyclage de solvant (10) dans le second moyen de traitement (240).

8. Procédé selon l'une quelconque des revendications précédentes, dans lequel le dioxyde de carbone est libéré dans la régénération du solvant dans le second moyen de traitement (240), et de préférence dans lequel le courant de dioxyde de carbone (246) résultant est épuré avec le courant de solvant (65) avant l'ajout du courant de solvant (65) au circuit de recyclage de solvant (10).

9. Procédé selon l'une quelconque des revendications précédentes, dans lequel le gaz d'alimentation est choisi parmi le biogaz, le gaz d'enfouissement et/ou le gaz naturel, et dans lequel le sulfure d'hydrogène a été éliminé du gaz d'alimentation avant la compression.

10. Procédé selon l'une quelconque des revendications précédentes, dans lequel le gaz au moins partiellement séché et comprimé est mis en contact dans l'absorbeur de solvant (40) avec un solvant de manière sensiblement isotherme.

11. Système de purification de gaz d'alimentation comprenant :
- un compresseur (20) avec une entrée pour le gaz d'alimentation. Une entrée d'un courant de gaz de recyclage (86), et une sortie pour le gaz comprimé ;
- des moyens de refroidissement (22) pour refroidir le gaz comprimé ;
- un séparateur gaz-liquide (30) disposé en aval des moyens de refroidissement (22) pour l'élimination du condensat formé pendant le traitement du gaz comprimé avec les moyens de refroidissement (22) ;
- des moyens d'absorption des impuretés (40, 80) comportant des composés organiques volatils (COV) et du dioxyde de carbone à partir du gaz comprimé et au moins partiellement séché, pourvus d'une sortie de recyclage pour un courant gazeux de recyclage (86), et une sortie pour le gaz ainsi purifié,
dans lequel
- les moyens d'absorption des impuretés (40, 80) comprennent un absorbeur de solvant (40), qui est pourvu d'une entrée pour le solvant, et d'une sortie pour le gaz ainsi traité ;
- l'absorbeur de solvant (40) est disposé dans un circuit de circulation de solvant (10) comprenant un premier et un second moyen de traitement (140, 240) pour la régénération du solvant pour éliminer les impuretés absorbées, ledit premier moyen de traitement (140) étant conçu pour fonctionner à une pression plus élevée que celle du second moyen de traitement (240),
- le circuit de recyclage de solvant (10) est conçu pour séparer un courant d'élimination (145) dans le premier moyen de traitement (140) ou en aval du de celui-ci et en amont du second moyen de traitement (240),
- une unité de reprise (60) est prévue pour réduire la concentration en COV du courant d'élimination (145), dans lequel l'unité de reprise (60) comprend un dispositif d'extraction (70) permettant d'extraire le solvant au moyen d'un gaz d'extraction (146A), dans lequel le gaz d'extraction est de la vapeur instantanée (146A) provenant du premier moyen de traitement (140) dans le circuit de recyclage de solvant (10), et dans lequel une sortie de solvant (65) de l'unité de reprise (60) est accouplée au circuit de recyclage de solvant (10).

12. Système selon la revendication 11, dans lequel l'unité de reprise (60) comprend un appareil pour la séparation des composés organiques volatils (COV) à partir du courant d'élimination (145, 77), comprenant un circuit de condensation doté :
- d'un épurateur (62) comprenant une entrée pour le courant d'alimentation (145) comprenant un solvant avec des COV et une sortie du courant d'alimentation (77) enrichi en COV, une entrée pour un courant de gaz recyclé (76), une sortie pour un courant de gaz épuré (66) ;
- d'un dispositif d'extraction (70) disposé en aval de l'épurateur de solvant (62), avec une entrée pour le gaz d'extraction (146A), une entrée pour le courant d'alimentation (77), une sortie de gaz pour un courant de gaz (78) enrichi en COV et une sortie pour un courant de solvant (75) ;
- d'un refroidisseur (72) disposé en aval du dispositif d'extraction (70) et conçu pour refroidir le courant gazeux (78) ;
- d'un séparateur vapeur-liquide (74) accouplé au refroidisseur (72), et ayant une sortie pour un courant de liquide (67, 37A) et une sortie de recyclage pour un courant de gaz (76), dans lequel ledit courant de gaz provenant de la sortie de recirculation est au moins partiellement recyclé vers l'épurateur (62).

13. Appareil selon la revendication 12, dans lequel le séparateur vapeur-liquide (74) est un séparateur en trois phases avec une première sortie pour un courant de liquide (67) principalement ou essentiellement constitué de COV, une seconde sortie pour un courant de liquide aqueux (37A) et la sortie de recyclage (76).

14. Système selon l'une quelconque des revendications 11 à 13, dans lequel le moyen d'absorption (40, 80) comprend en outre une unité de séparation (80) en aval de l'absorbeur de solvant (40), ladite unité de séparation (80) étant dotée de la sortie de recyclage (86) et de la sortie pour le gaz purifié, laquelle unité de séparation (80) est conçue pour réduire davantage une teneur en dioxyde de carbone du gaz traité, et de préférence est une unité de séparation par membrane.

15. Système selon l'une quelconque des revendications 11 à 14, dans lequel ledit circuit de circulation de solvant (10) comprend en outre des moyens de refroidissement (42) disposés en aval desdits premier et second moyens de traitement (140, 240) pour refroidir le solvant à une température correspondant sensiblement à une température du gaz comprimé et séché.
